# EUROPÄISCHE PATENTSCHRIFT

(11) **EP 0 727 916 B1**
(45) Veröffentlichungstag und Bekanntmachung des Hinweises auf die Patenterteilung: **21.11.2001**
(21) Anmeldenummer: 96101681.3
(22) Anmeldetag: 06.02.1996
(51) Int. Cl.: H04Q 11/04, H04Q 3/62, H04Q 3/545

(54) **Modular aufgebautes Kommunikationssystem**
Modular communication system
Système de communication modulaire

(30) Priorität: 16.02.1995 DE 19505271
(43) Veröffentlichungstag der Anmeldung: 21.08.1996
(73) Patentinhaber: SIEMENS AKTIENGESELLSCHAFT, 80333 München (DE)
(72) Erfinder: Leimkötter, Ulrich, Dipl.-Ing., D-45888 Gelsenkirchen (DE)

(56) Entgegenhaltungen:
- EP-A- 0 288 935
- EP-A- 0 519 106
- WO-A-94/16528
- US-A- 5 014 269

## Beschreibung

Die Erfindung betrifft ein Kommunikationsystem gemäß den Merkmalen des Oberbegriffs von Anspruch 1.

Kommunikationssysteme für eine geringe Anzahl anschließbarer Kommunikationsendgeräte beruhen derzeit auf einem Systemkonzept mittlerer, modular aufgebauter Kommunikationssysteme. Das auf einer HDLC-orientierten (High-Level Data Link Control) Schnittstelle als externe Busschnittstelle basierende Systemkonzept ist aus der Europäischen Patentschrift EP 0 519 106 bekannt. Ein derartiges Systemkonzept beinhaltet eine Zentralbaugruppe, die eine Basiseinheit und eine mit ihr verbundene Ergänzungseinheit umfaßt. Die Basiseinheit enthält einen mit einem Multitasking-Betriebssystem arbeitenden Zentralprozessor zur Steuerung des Kommunikationssystems, einen Systemspeicher und eine Peripheriebaugruppensteuerung. Ein interner, aus Daten-, Adreß- und Statusleitungen bestehender Bus der Basiseinheit verbindet den Zentralprozessor, den Systemspeicher und die Peripheriebaugruppensteuerung. Vom Zentralprozessor besteht durch die Peripheriebaugruppensteuerung eine Verbindung zu einer HDLC-orientierten Schnittstelle, die den Anschluß von peripheren Baugruppen innerhalb und außerhalb der Zentralbaugruppe ermöglicht. Hierbei tritt ein hoher Informationsaustausch zwischen den peripheren Baugruppen und der Zentralbaugruppe auf.

Der Anschluß an die HDLC-orientierte Schnittstelle erfordert in jeder angeschlossenen Baugruppe eine Prozessoreinrichtung und eine Peripheriebaugruppensteuerung entsprechend der zur Basiseinheit gehörigen Peripheriebaugruppensteuerung. Die Ergänzungseinheit enthält zumindest ein Funktionen zur Takt- und Tonerzeugung sowie Funktionen zur Synchronisation der Informationsverarbeitung enthaltendes Vermittlungselement. Für periphere Teilnehmerbaugruppen zum Anschluß der Kommunikationsendgeräte sind deshalb neben einer Teilnehmerübertragungseinheit und einer die Vermittlung und die Signalisierung angeschlossener Kommunikationselemente bewirkenden Peripheriesteuerung ein Prozessor und eine Peripheriebaugruppensteuerung vorgesehen.

Über die HDLC-orientierte Schnittstelle ist die Übertragung von Sprach- und Signalisierungsinformationen sowie Daten mit hoher Übertragungsgeschwindigkeit möglich. Der hohe, kostenintensive Bauelementeaufwand, der insbesondere durch den Einsatz der Prozessoren und Peripheriebaugruppensteuerungen entsteht, ist zur Konfiguration von größeren Kommunikationssystemen gerechtfertigt. Das Systemkonzept eignet sich weniger zur Konfiguration mittlerer, unter geringen Kosten zu erweiternden und zu verändernden Kommunikationssystemen.

Der Erfindung liegt die Aufgabe zugrunde, ein kleines oder mittleres, modular aufgebautes Kommunikationssystem so auszugestalten, daß es unter Berücksichtigung einer flexiblen Konfigurierbarkeit mit geringstem Aufwand erweiterbar ist. Die Aufgabe wird ausgehend vom Kommunikationssystem nach den Merkmalen des Oberbegriffs des Patentanspruch 1 durch dessen kennzeichnende Merkmale gelöst.

Der wesentliche Aspekt des erfindungsgemäßen Kommunikationssystems ist darin zu sehen, daß dem Zentralprozessor eine eine Vermittlung und Signalisierung angeschlossener Kommunikationsendgeräte bewirkende Peripheriesteuerung zugeordnet ist. Diese Peripheriesteuerung unterstützt mehrere ISDN-orientierte Schnittstellen, an welche mit geringem Schaltungsaufwand realisierte Teilnehmerübertragungseinheiten anschließbar sind. Durch diese zusätzlichen ISDN-orientierten Schnittstellen ergibt sich eine erhöhte Kombinationsvielfalt zur Erweiterung und Konfiguration eines kleinen oder mittleren Kommunikationssystems und damit die Möglichkeit, neue Generationen kostengünstiger peripherer Baugruppen im Sinne einer Erweiterung oder Rekonfiguration in das bestehende Kommunikationssystem zu integrieren. Es ergibt sich dabei auch der Vorteil, daß die Flexibilität für eine Erweiterung oder Rekonfiguration des bestehenden Kommunikationssystems erhöht wird.

Die Teilnehmerübertragungseinheiten sind vorteilhafterweise als kostengünstig herstellbare periphere ISDN-Übertragungseinheiten oder als ISDN-Basisanschlußeinheiten ausgestaltet - Anspruch 2.

Unter Einbeziehung der HDLC-orientierten Schnittstelle kann die Ergänzungseinheit so ausgestaltet werden, daß sie zusätzlich eine Peripheriebaugruppensteuerung und einen das Vermittlungselement und die Peripheriebaugruppensteuerung verbindenden Prozessor enthält, wobei die Ergänzungseinheit über die Peripheriebaugruppensteuerung mit einer HDLC-orientierten Schnittstelle der Peripheriebaugruppensteuerung der Basiseinheit verbunden ist - Anspruch 3. Diese Variante ist als Standardvariante vorteilhaft, da die Prozessorfunktionen in der Basiseinheit weitgehend unbeeinflußt bleiben und die Ergänzungseinheit als interne periphere Baugruppe betrieben wird.

Die Ergänzungseinheit kann jedoch auch auf kostengünstigere Weise ausgestaltet werden. Bei dieser Konfigurationsvariante wird auch das die Zusatzfunktionen zur Takt- und Tonerzeugung sowie Funktionen zur Synchronisation der Informationsverarbeitung enthaltende Vermittlungselement an den internen Bus der Basiseinheit angeschlossen - Anspruch 4. Bei dieser Variante beziehen die Prozessorfunktionen der Basiseinheit die Steuerung des Vermittlungselementes ein, d.h. der Zentralprozessor und die Peripheriesteuerung übernehmen die Vermittlungsfunktionen und teilweise Zusatzfunktionen des Vermittlungselementes. Das Zusatzfunktionen zur Takt- und Tonerzeugung sowie Funktionen zur Synchronisation der Informationsverarbeitung enthaltende Vermittlungselement kann damit vereinfacht werden, so daß auf Vermittlungsfunktionen und einen Teil der Zusatzfunktionen verzichtet werden kann. Da die Vermittlungsfunktionen von der Peripheriesteuerung zusätzlich übernommen werden, können kostengünstigere Ausbildungen des Vermittlungselementes eingesetzt werden.

Gemäß einer vorteilhaften Ausgestaltung werden die Teilnehmerübertragungseinheiten nicht über Anschlußmittel, die für HDLC-Schnittstellen genutzt werden, sondern über separate Anschlußmittel der Zentralbaugruppe angeschlossen - Anspruch 5. Damit wird die bestehende Anzahl anschließbarer peripherer Baugruppen nicht eingeschränkt und eine Erweiterung bestehender Kommunikationssysteme - insbesondere durch zusätzliche periphere Baugruppen - ermöglicht. Die separaten Anschlußmittel der Zentralbaugruppe sind vorteilhafterweise als lösbare Verbindung, insbesondere als Steckverbinder, auf der Frontseite der Zentralbaugruppe angeordnet - Ansprüche 6 und 7.

Die aufgabengerechte Verarbeitung verschiedenartigster Anreize, die entweder an die Kommunikationsendgeräte übermittelt werden oder von den Kommunikationsendgeräten empfangen werden, durch den Zentralprozessor erfordert im Zusammenhang mit dem parallelen Einsatz verschiedener Schnittstellen eine Priorisierung und demgemäße vorrangige Bearbeitung von Anreizen zur Ruf-, Ton- und Wegsignalisierung gegenüber Anreizen zur Anzeigensignalisierung. Dazu wird der Zwischenspeicher für die an die Endgeräte abzugebenden Anreize in einem Zwischenspeicher für vorrangig abzuarbeitende Ruf-, Ton- und Wegsignalisierungen und einen Zwischenspeicher für niederpriorisierte Anzeigesignalisierungen aufgeteilt - Anspruch 8.

Die Größe des Zwischenspeichers zum Zwischenspeichern eines Anreizes zur Anzeigensignalisierung kann minimiert werden, indem die Basiseinheit derart ausgebildet ist, daß erst dann das Zwischenspeichern eines Anreizes zur Anzeigensignalisierung für ein Kommunikationsendgerät in den Zwischenspeicher für Anzeigensignalisierung veranlaßt wird, wenn für dieses Kommunikationsendgerät keine noch ungesendeten Anreize im Zwischenspeicher für Anzeigensignalisierung vorliegen - Anspruch 9. Vorteilhafterweise ist der Zwischenspeicher als Ringspeicher ausgebildet.

Anhand von zwei Blockschaltbildern werden zwei vorteilhafte Ausgestaltungen des erfindungsgemäßen Kommunikationssystems näher erläutert werden.

Dabei zeigen
- FIG 1: ein Blockschaltbild eines Kommunikationssystems mit vereinfachter Ergänzungseinheit und
- FIG 2: ein Blockschaltbild eines Kommunikationssystems mit einer über eine HDLC-orientierte Schnittstelle anschließbaren Ergänzungseinheit.

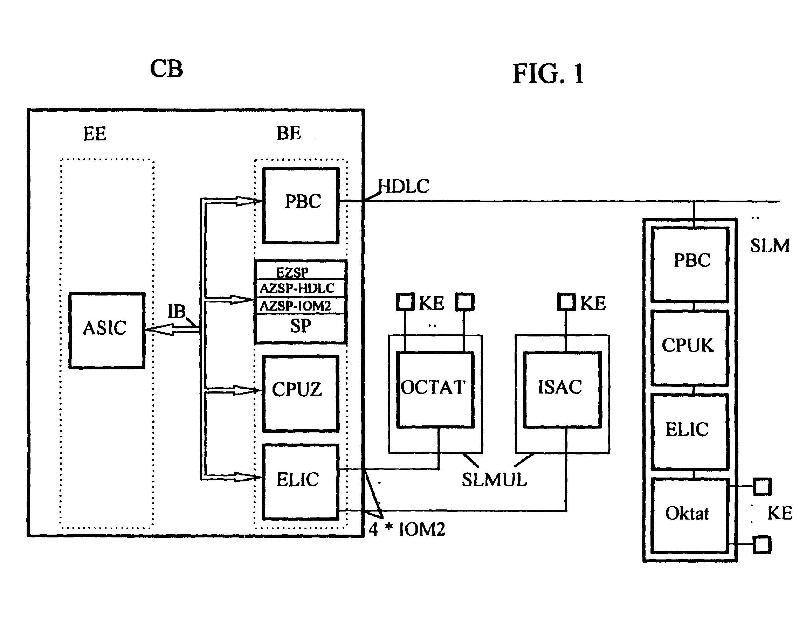

In FIG 1 ist ein Kommunikationssystem KS zur Vermittlung angeschlossener Kommunikationsendgeräte KE dargestellt. Das Kommunikationssystem enthält eine aus einer Basiseinheit BE und einer Ergänzungseinheit EE bestehenden Zentralbaugruppe CB, periphere Teilnehmerbaugruppen SLM und Teilnehmerübertragungseinheiten SLMUL. In der Basiseinheit BE ist ein Zentralprozessor CPUZ, ein Systemspeicher SP, der auch Zwischenspeicher EZSP, AZSP eingehenden bzw. abzugebenden Anreize enthält, eine Peripheriebaugruppensteuerung PBC und eine Vermittlung und Signalisierung angeschlossener Kommunikationsendgeräte KE bewirkende Peripheriesteuerung ELIC über einen internen Bus IB miteinander verbunden. Der Zentralprozessor CPUZ steuert unter Zuhilfenahme des Systemspeichers SP die Peripheriebaugruppensteuerung PBC, die Vermittlung und Signalisierung angeschlossener Kommunikationsendgeräte KE bewirkende Peripheriesteuerung ELIC und ein Vermittlungselement ASIC. Dieses Vermittlungselement ASIC stellt die Ergänzungseinheit EE dar und enthält Zusatzfunktionen zur Takt- und Tonerzeugung und zur Synchronisation der Informationsverarbeitung.

Das Kommunikationssystem KS dient der Vermittlung von über zwei verschiedene Schnittstellentypen angeschlossenen Kommunikationsendgeräten KE. Es handelt sich dabei um eine HDLC-orientierte (High Level Data Link Control) Schnittstelle und bis zu vier ISDN-orientierten Schnittstellen IOM2 (ISDN-oriented Modular). Die HDLC-orienterte Schnittstelle HDLC steuert einen seriellen Bus mit einer Master/Slave-Aufteilung, in der die prozessorgesteuerte Zentralbaugruppe CB den Master und die prozessorgesteuerten peripheren Teilnehmerbaugruppen SLM die Slaves darstellen. Die peripheren Teilnehmerbaugruppen SLM werden von der Zentralbaugruppe CB auf Anreiz-Zustandsänderungen abgefragt und mit Signalisierungsanzeigen versorgt. Jeder peripheren Teilnehmerbaugruppe ist entsprechend ihrem Einbauplatz eine spezielle Adresse zugeordnet. Bei der ISDN-orientierten Schnittstelle IOM2 handelt es sich um einen seriellen Kommunikationsbus, der im Zeitmultiplexverfahren Sprache, Daten bzw. Steuerinformationen überträgt. Mit der Multiplextechnik lassen sich maximal acht ISDN-Teilnehmerleitungen über eine ISDN-orientierte Schnittstelle IOM2 übertragen.

Die von der Peripheriebaugruppensteuerung PBC der Basiseinheit unterstützte HDLC-orientierte Schnittstelle HDLC ermöglicht die Verbindung des Kommunikationssystems KS mit einem Kommunikationsnetz sowie die Vermittlung der an die peripheren Teilnehmerbaugruppen SLM angeschlossenen Kommunikationsendgeräte KE. Die peripheren Teilnehmerbaugruppen SLM können unterschiedlich ausgebildet sein. In FIG 1 besteht die periphere Teilnehmerbaugruppe SLM beispielgebend aus einer Peripheriebaugruppensteuerung PBC, die die Verbindung zur HDLC-orientierten Schnittstelle HDLC herstellt, einem Prozessor CPUK, der die periphere Teilnehmerbaugruppe SLM steuert, sowie einer die Vermittlung und die Signalisierung angeschlossener Kommunikationsendgeräte KE bewirkender Peripheriesteuerung ELIC und einer ISDN-Übertragungseinheit OCTAT. Der Prozessor CPUK ist mit der Peripheriebaugruppensteuerung PBC und mit der Peripheriesteuerung ELIC verbunden. Die Peripheriesteuerung ELIC mit der ISDN-Übertragungseinheit OCTAT verbunden. In der ISDN-Übertragungseinheit OCTAT sind acht Übertragungsschaltungen integriert. Durch jede dieser Übertragungsschaltungen ist eine nach dem Zeitgetrenntlage-Verfahren wirkende Up-Schnittstelle realisiert. Jede dieser Up-Schnittstellen ist für den Anschluß eines mit einer gleichartigen Up-Schnittstelle ausgestatteten Kommunikationsendgerätes KE vorgesehen und ermöglicht eine bidirektionale Informationsübermittlung.

Die Peripheriesteuerung ELIC der Basiseinheit BE unterstützt bis zu vier ISDN-orientierte Schnittstellen IOM2. Wie in FIG 1 dargestellt ist beispielgebend an eine ISDN-orientierte Schnittstelle IOM2 eine periphere ISDN-Übertragungseinheit OCTAT und an eine weitere ISDN-orientierte Schnittstelle IOM2 eine ISDN-Basisanschlußeinheit ISAC angeschlossen; beliebige weiter Kombinationen beim Anschluß an die vier ISDN-orientierten Schnittstellen IOM2 sind möglich. Sowohl die periphere ISDN-Übertragungseinheit OCTAT als auch die ISDN-Basisanschlußeinheit ISAC realisieren einfache Teilnehmerübertragungseinheiten SLMUL, die den direkten Anschluß von Kommunikationsendgeräten KE zulassen. An eine ISDN-Basisanschlußeinheit ISAC kann über eine dort realisierte So-Schnittstelle auch ein ISDN-Anschluß eines öffentlichen Kommunikationsnetzes angeschaltet sein.

Bei realisierten Kommunikationssystemen KS erfolgt der Anschluß von peripheren Teilnehmerbaugruppen SLM an die HDLC-orientierte Schnittstelle HDLC über Anschlußmittel - Rückwandverdrahtung - auf der Rückseite der Zentralbaugruppe CB. Für die Erweiterung eines derartigen Kommunikationssystems KS werden die Teilnehmerübertragungseinheiten SLMUL vorteilhafterweise über einen Steckverbinder auf der Frontseite der Zentralbaugruppe CB an diese angeschlossen. Damit sind keine Änderungen der Rückwandverdrahtung erforderlich und eine flexible Zuordnung der Teilnehmerübertragungseinheiten SLMUL zu den ISDN-orientierten Schnittstellen IOM2 möglich.

Die Steuerung der Zentralbaugruppen CB durch den Zentralprozessor CPUZ basiert auf einer zentralen Anreiz-Zustands-Verarbeitung. Mit Hilfe des Zentralprozessors CPUZ wird, basierend auf einem Multitasking-Betriebssystem das Kommunikationssystem KS betriebstechnisch, vermittlungstechnisch und administrativ gesteuert. Hierbei werden Anreize, die Informationen zur Signalisierung und Vermittlung beinhalten, im Rahmen der Verbindungssignalisierung vom Kommunikationssystem KS an die Kommunikationsendgeräte KE abgegeben bzw. von den Kommunikationsendgeräten KE kommend durch das Kommunikationssystem KS empfangen. Die von den Kommunikationsendgeräten KE eingehenden Anreize werden im Zwischenspeicher EZSP gesichert. Für die an die Kommunikationsendgeräte KE abzugebenden Anreize sind zwei unterschiedlich priorisierte Zwischenspeicher vorgesehen. Der Zwischenspeicher AZSP für die abzugebenden Anreize beinhaltet einen Zwischenspeicher für die vorrangig abzuarbeitenden Ruf, Ton- und Wegsignalisierungen AZSP-HDLC, der zuerst bearbeitet wird, und einen Zwischenspeicher für Anzeigesignalisierungen AZSP-IOM2. Für die niederpriorisierten Anreize zur Anzeigensignalisierung (LED- oder Displaysignalisierung) wird das Zwischenspeichern weiterer abzugebender Anreize für ein Kommunikationsendgerät KE zurückgehalten, wenn dieses Kommunikationsendgerät KE die vorhergehende Anzeigensignalisierung noch nicht verarbeitet hat, also im Zwischenspeicher für Anzeigensignalisierung AZSP-IOM2 noch weitere abzugebende Anreize für dieses Kommunikationsendgerät KE vorliegen.

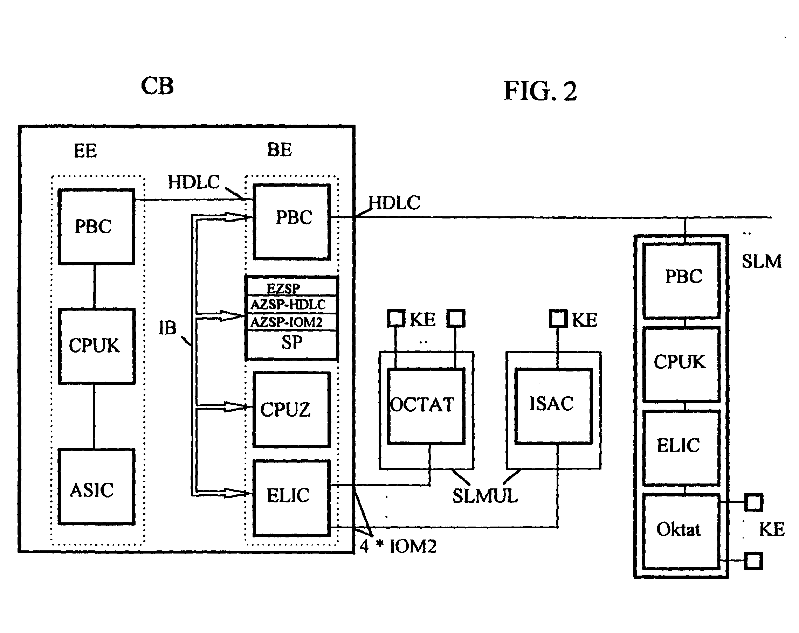

In FIG 2 ist das Kommunikationssystem aus FIG 1 nur insoweit abgewandelt, als daß die Ergänzungseinheit EE auf andere Weise ausgestaltet ist und mit der Basiseinheit BE über eine HDLC-orientierte Schnittstelle HDLC verbunden ist. Die Ergänzungseinheit EE besteht aus einem Prozessor CPUK, der mit einem die Zusatzfunktionen zur Takt- und Tonerzeugung und zur Synchronisation der Informationsverarbeitung enthaltenden Vermittlungselement ASIC und einer Peripheriebaugruppensteuerung PBC verbunden ist. Die Ergänzungseinheit EE ist über ihre Peripheriebaugruppensteuerung PBC an die HDLC-orientierte Schnittstelle der Peripheriebaugruppensteuerung PBC der Basiseinheit angeschlossen und ermöglich damit der Zentralbaugruppe CB den Zugriff auf die Zusatzfunktionen und die Funktionen zur Synchronisation der Informationsverarbeitung im Vermittlungselemnt ASIC.

Die Kommunikationssysteme KS nach FIG 1 und FIG 2 ermöglichen durch die parallele Nutzung der HDLC-orientierten Schnittstelle HDLC und der ISDN-orientierten Schnittstellen IOM2 eine flexible Konfigurierbarkeit und eine erhebliche Erweiterung eines bestehenden Kommunikationssystems mit geringem Aufwand ohne Einschränkungen der bisherigen Konfiguration. Das Kommunikationssysteme KS nach FIG 1 erfordert dabei einen größeren Redesignaufwand als das Kommunikationssysteme KS nach FIG 2, wo die Prozessorfunktionen der Basiseinheit BE weitgehend unbeeinflußt bleiben. Die Variante des Kommunikationssysteme KS nach FIG 1 birgt jedoch ein größeres Einsparungspotential durch die vereinfachte und kostengünstigere Gestaltung der Ergänzungseinheit EE.

## Patentansprüche

1. Kommunikationssystem (KS) zur Vermittlung von angeschlossenen Kommunikationsendgeräten (KE),
- mit einer Zentralbaugruppe (CB) zur zentralen AnreizZustand-Steuerung und Vermittlung, die
-- eine Basiseinheit (BE), in der ein interner Bus (IB)
--- einen Zentralprozessor (CPUZ),
--- einen Systemspeicher (SP) und zugeordnete Zwischenspeicher (EZSP, AZSP) für von den Kommunikationsendgeräten (KE) eingehenden bzw. an die Kommunikationsendgeräte (KE) abzugebenden Anreize zur Anzeigensignalisierung bzw. zur Ruf-, Ton- und Wegsignalisierungen und
--- eine Peripheriebaugruppensteuerung (PBC) zur Realisierung einer HDLC-orientierten Schnittstelle (HDLC) zum Anschluß peripherer Baugruppen verbindet, und
-- eine mit der Basiseinheit (BE) verbundene, zumindest ein Zusatzfunktionen zur Takt- und Tonerzeugung und zur Synchronisation der Informationsverarbeitung enthaltendes Vermittlungselement (ASIC) beinhaltende Ergänzungseinheit (EE) umfaßt
- und mit mindestens einer peripheren Teilnehmerbaugruppe (SLM), die jeweils mit einer HDLC-orientierten Schnittstelle (HDLC) verbindbar ist,
**dadurch gekennzeichnet,**
- **daß** der Zentralprozessor (CPUZ) zusätzlich über den internen Bus (IB) mit einer eine Vermittlung und Signalisierung angeschlossener Kommunikationsendgeräte (KE) bewirkende Peripheriesteuerung (ELIC) verbunden ist, und
- **daß** durch die Peripheriesteuerung (ELIC) eine ISDN-orientierte Schnittstelle (IOM2) realisiert ist,
-- an die bis zu vier Teilnehmerübertragungseinheiten (SLMUL) für den Anschluß weiterer Kommunikationsendgeräte (KE) anschließbar sind.

2. Kommunikationssystem nach Anspruch 1,
**dadurch gekennzeichnet,**
**daß** die Teilnehmerübertragungseinheiten (SLMUL) als periphere ISDN-Übertragungseinheiten (OCTAT) oder als ISDN-Basisanschlußeinheiten (ISAC) ausgestaltet sind.

3. Kommunikationssystem nach einem der Ansprüche 1 oder 2,
**dadurch gekennzeichnet,**
**daß** die Ergänzungseinheit (EE) zusätzlich eine Peripheriebaugruppensteuerung (PBC) und einen das Vermittlungselement (ASIC) und die Peripheriebaugruppensteuerung (PBC) verbindenden Prozessor (CPUK) enthält und
**daß** die Ergänzungseinheit (EE) über ihre Peripheriebaugruppensteuerung (PBC) mit einer HDLC-orientierten Schnittstelle (HDLC) der Peripheriebaugruppensteuerung (PBC) der Basiseinheit verbunden ist.

4. Kommunikationssystem nach einem der Ansprüche 1 oder 2,
**dadurch gekennzeichnet,**
**daß** das Zusatzfunktionen zur Takt- und Tonerzeugung und zur Synchronisation der Informationsverarbeitung enthaltende Vermittlungselement (ASIC) der Ergänzungseinheit (EE) an den internen Bus (IB) der Basiseinheit (BE) angeschlossen ist.

5. Kommunikationssystem nach einem der Ansprüche 1 bis 4,
**dadurch gekennzeichnet,**
**daß** der Anschluß der Teilnehmerübertragungseinheiten (SLMUL) an die ISDN-orientierte Schnittstelle (IOM2) über separate Anschlußmittel der Zentralbaugruppe (CB) geschieht.

6. Kommunikationssystem nach einem der Ansprüche 1 bis 5,
**dadurch gekennzeichnet,**
**daß** die separaten Anschlußmittel der Zentralbaugruppe (CB) als eine lösbare Verbindung auf der Frontseite der Zentralbaugruppe (CB) angeordnet sind.

7. Kommunikationssystem nach Anspruch 6,
**dadurch gekennzeichnet,**
**daß** die lösbare Verbindung als Steckverbindung ausgebildet ist.

8. Kommunikationssystem nach einem der Ansprüche 1 bis 7,
**dadurch gekennzeichnet,**
**daß** der Zwischenspeicher (AZSP) in einem Zwischenspeicher für vorrangig abzuarbeitende Ruf-, Ton- und Wegsignalisierungen (AZSP-HDLC) und einen Zwischenspeicher für niederpriorisierte Anzeigesignalisierungen (AZSP-IOM2) aufgeteilt ist.

9. Kommunikationssystem nach Anspruch 8,
**dadurch gekennzeichnet,**
**daß** die Basiseinheit (BE) derart ausgestaltet ist, daß im Rahmen des prioritätsorientierten Bearbeitens von Anreizen erst dann das Zwischenspeichern eines Anreizes zur Anzeigensignalisierung für ein Kommunikationsendgerät (KE) in den Zwischenspeicher für Anzeigensignalisierung (AZSP-IOM2) veranlaßt wird, wenn für dieses Kommunikationsendgerät (KE) keine noch ungesendeten Anreize im Zwischenspeicher für eine Anzeigensignalisierung (AZSP-IOM2) vorliegen.

## Claims

1. Communication system (KS) for switching connected communication terminals (KE),
- having a central module (CB) for central stimulus state control and switching which comprises
-- a basic unit (BE) in which an internal bus (IB) connects
--- a central processor (CPUZ),
--- a system memory (SP) and associated buffer memories (EZSP, AZSP) for stimuli, which arrive from the communication terminals (KE) or are to be output to the communication terminals (KE), for display signalling and for ringing, tone and path signalling operations, and
--- a peripheral module controller (PBC) for providing an HDLC-oriented interface (HDLC) for connecting peripheral modules,
and
-- a complementary unit (EE) which is connected to the basic unit (BE) and contains at least one switching element (ASIC) containing additional functions for clock and tone generation and for synchronizing information processing,
- and having at least one peripheral subscriber module (SLM) which can be connected to an HDLC-oriented interface (HDLC) in each case,
**characterized**
- **in that** the central processor (CPUZ) is additionally connected by means of the internal bus (IB) to a peripheral controller (ELIC) which effects switching and signalling for connected communication terminals (KE), and
- **in that** the peripheral controller (ELIC) provides an ISDN-oriented interface (IOM2),
-- to which up to four subscriber transmission units (SLMUL) for connecting further communication terminals (KE) can be connected.

2. Communication system according to Claim 1,
**characterized**
**in that** the subscriber transmission units (SLMUL) are in the form of peripheral ISDN transmission units (OCTAT) or ISDN basic access units (ISAC).

3. Communication system according to either of Claims 1 and 2,
**characterized**
**in that** the complementary unit (EE) additionally contains a peripheral module controller (PBC) and a processor (CPUK) which connects the switching element (ASIC) and the peripheral module controller (PBC), and
**in that** the complementary unit (EE) is connected via its peripheral module controller (PBC) to an HDLC-oriented interface (HDLC) of the peripheral module controller (PBC) of the basic unit.

4. Communication system according to either of Claims 1 and 2,
**characterized**
**in that** the switching element (ASIC) in the complementary unit (EE), which switching element contains additional functions for clock and tone generation and for synchronizing information processing, is connected to the internal bus (IB) of the basic unit (BE).

5. Communication system according to one of Claims 1 to 4,
**characterized**
**in that** the subscriber transmission units (SLMUL) are connected to the ISDN-oriented interface (IOM2) by means of separate connection means for the central module (CB).

6. Communication system according to one of Claims 1 to 5,
**characterized**
**in that** the separate connection means for the central module (CB) are arranged as a detachable connection on the front of the central module (CB).

7. Communication system according to Claim 6,
**characterized**
**in that** the detachable connection is in the form of a plug connection.

8. Communication system according to one of Claims 1 to 7,
**characterized**
**in that** the buffer memory (AZSP) is split into a buffer memory for ringing, tone and path signalling operations (AZSP-HDLC) to be processed with priority and a buffer memory for low-priority display signalling operations (AZSP-IOM2).

9. Communication system according to Claim 8,
**characterized**
**in that** the basic unit (BE) is designed such that, within the context of priority-oriented processing of stimuli, a stimulus for display signalling for a communication terminal (KE) is buffer-stored in the buffer memory for display signalling (AZSP-IOM2) only if there are no as yet unsent stimuli for this communication terminal (KE) in the buffer memory for display signalling (AZSP-IOM2).

## Revendications

1. Système de communication (KS) pour la commutation de terminaux de communication (KE) raccordés,
- comprenant un module central (CB) qui est destiné à la commande d'état d'impulsions et à la commutation et qui comprend
-- une unité de base (BE), dans laquelle un bus interne (IB) relie
--- un processeur central (CPUZ),
--- une mémoire de système (SP) et des mémoires intermédiaires (EZSP, AZSP) associées pour des impulsions arrivant des terminaux de communication (KE) ou à délivrer aux terminaux de communication (KE) pour la signalisation d'affichage ou pour la signalisation d'appel, de tonalité et d'acheminement, et
--- une commande de module périphérique (PBC) pour la réalisation d'une interface (HDLC) orientée HDLC pour le raccordement de modules périphériques, et
-- une unité d'extension (EE) reliée à l'unité de base (BE) et contenant au moins un élément de commutation (ASIC) contenant des fonctions supplémentaires pour la production d'horloge et de tonalité et pour la synchronisation du traitement d'informations
- et comprenant au moins un module d'abonné périphérique (SLM) qui peut être relié à chaque fois à une interface (HDLC) orientée HDLC,
**caractérisé par le fait que**
- le processeur central (CPUZ) est relié en plus par l'intermédiaire du bus interne (IB) à une commande périphérique (ELIC) mettant en oeuvre la commutation et la signalisation de terminaux de communication raccordés (KE), et
- la commande périphérique (ELIC) réalise une interface (IOM2) orientée RNIS
-- à laquelle jusqu'à quatre unités de transmission d'abonnés (SLMUL) pour le raccordement d'autres terminaux de communication (KE) peuvent être raccordées.

2. Système de communication selon la revendication 1,
**caractérisé par le fait que** les unités de transmission d'abonnés (SLMUL) sont conçues comme des unités de transmission RNIS périphériques (OCTAT) ou comme des unités de raccordement de base RNIS (ISAC).

3. Système de communication selon l'une des revendications 1 ou 2,
**caractérisé par le fait que**
l'unité d'extension (EE) contient en plus une commande de module périphérique (PBC) et un processeur (CPUK) reliant l'élément de commutation (ASIC) et la commande de module périphérique (PBC) et
l'unité d'extension (EE) est reliée par l'intermédiaire de sa commande de module périphérique (PBC) à une interface (HDLC) orientée HDLC de la commande de module périphérique (PBC) de l'unité de base.

4. Système de communication selon l'une des revendications 1 ou 2,
**caractérisé par le fait que** l'élément de commutation (ASIC), contenant des fonctions supplémentaires pour la production d'horloge et de tonalité et pour la synchronisation du traitement d'informations, de l'unité d'extension (EE) est raccordé au bus interne (IB) de l'unité de base (BE).

5. Système de communication selon l'une des revendications 1 à 4,
**caractérisé par le fait que** le raccordement des unités de transmission d'abonnés (SLMUL) à l'interface (IOM2) orientée RNIS s'effectue par l'intermédiaire de moyens de raccordement séparés faisant partie du module central (CB).

6. Système de communication selon l'une des revendications 1 à 5,
**caractérisé par le fait que** les moyens de raccordement séparés du module central (CB) sont agencés comme une liaison amovible sur la façade du module central (CB).

7. Système de communication selon la revendication 6,
**caractérisé par le fait que** la liaison amovible est conçue comme un connecteur à fiches.

8. Système de communication selon l'une des revendications 1 à 7,
**caractérisé par le fait que** la mémoire intermédiaire (AZSP) est divisée en une mémoire intermédiaire (AZSP-HDLC) pour des signalisations d'appel, de tonalité et d'acheminement à traiter en priorité et en une mémoire intermédiaire (AZSP-IOM2) pour des signalisations d'affichage moins prioritaires.

9. Système de communication selon la revendication 8,
**caractérisé par le fait que** l'unité de base (BE) est conçue de telle sorte que, dans le cadre du traitement des impulsions selon les priorités, la mémorisation temporaire d'une impulsion pour la signalisation d'affichage pour un terminal de communication (KE) dans la mémoire intermédiaire (AZSP-IOM2) destinée aux signalisations d'affichage n'est provoquée que lorsqu'il n'y a pour ce terminal de communication (KE) aucune impulsion encore non émise dans la mémoire intermédiaire pour signalisation d'affichage (AZSP-IOM2).
